Europäisches Patentamt

European Patent Office

Office européen des brevets

(11) Publication number: **0 399 125**
**A1**

## EUROPEAN PATENT APPLICATION

(21) Application number: 89420179.7

(22) Date of filing: 23.05.89

(51) Int. Cl.5: **B65G 59/04, B21D 43/24**

(43) Date of publication of application:
**28.11.90 Bulletin 90/48**

(84) Designated Contracting States:
**CH DE FR GB LI NL**

(71) Applicant: **Nippon Sanso Kabushiki Kaisha**
**16-7, Nishishinbashi 1-chome**
**Minato-ku Tokyo(JP)**

(72) Inventor: **Kimoto, Takeshi**
**1-3-18-501, Uenohara**
**Higashikurume-Shi Tokyo(JP)**

(74) Representative: **Laurent, Michel et al**
**Cabinet Laurent et Charras 20, rue Louis**
**Chirpaz B.P. 32**
**F-69131 Ecully Cédex(FR)**

(54) Apparatus for handling stacked metal-sheet work pieces.

(57) A handling apparatus includes: a storage unit
(34, 36, 132, 134, 136, 138) defining a storage space
for receiving a stack of metal-sheet work pieces; a
separating unit (48, 50, 228, 230, 232, 234) for
separating the stacked work pieces from one another
in the storage space; and a pick-up unit (16, 182,
184, 186, 188, 190, 192, 200, 202, 204, 206, 208,
210, 212, 214, 216, 218, 220, 222) for picking up
each of the work pieces in the storage space in turn,
beginning with the topmost work piece, to transfer
the work piece which has been picked up, to a
predetermined position outside of the storage space.
The separating unit includes a magnet unit which
produces a magnetic field in the storage space, the
magnetic field being such that the lines of magnetic
flux extend substantially horizontally within the storage space. This magnetic field causes the work
pieces in the storage space to be magnetized and to
repel one another. The storage unit retains the
stacked work pieces in precise vertical alignment in
the storage space.

FIG.1

# APPARATUS FOR HANDLING STACKED METAL-SHEET WORK PIECES

## BACKGROUND OF THE INVENTION

This invention relates to an apparatus for handling stacked metal-sheet work pieces such as lead frames used in producing semiconductor devices, and more specifically, to an apparatus for separating and picking up metal-sheet work pieces one by one from a stack.

In the production process of semiconductor devices such as ICs and LSIs, long metal sheets of multiple lead frames (or lead-positioning frames) are generally used. Each sheet of lead frames has a series of rectangular sections, each punched in template fashion, to form many fine terminal leads. Each rectangular section includes, a central platform on which a semiconductor chip is to be mounted, and multiple fine terminal leads extending outward from the central platform. Bonding of semiconductor chips to the central platforms is achieved by a die-bonding machine, and then, the terminal leads of each rectangular section are brought into electrical contact respectively with terminals of a semiconductor chip by a wire-bonding machine.

In order to supply a die-bonding machine with the aforementioned metal sheets, a handling machine is used. A typical conventional handling machine includes a storage means, such as a stacking container for receiving many metal sheets of the same size and shape in a stacked fashion; a dispensing unit, disposed under the storage means, for taking the stacked metal sheets out one by one from the storage means; and a transfer means, also disposed under the storage means, for transferring the metal sheet which has been taken out, to a predetermined position on the die-bonding machine. The dispensing unit has a pair of vertically and horizontally movable clamping fingers for grasping a metal sheet at its opposite edges. During operation, the clamping fingers grasp the lowermost metal sheet, move downwards, and then release the metal sheet. The released metal sheet is caught by the transfer means. Each one of the stacked metal sheets can thus be taken out of the storage means in turn, beginning with the lowermost metal sheet, and can ultimately be loaded on the die-bonding machine.

However, the following problems arise in the operation of the conventional handling machine. Since each of the metal sheets is a very thin metal sheet (approximately 0.15 mm thick), a extremely precise control of the movement of the clamping fingers is required to prevent the clamping fingers from grasping two or more metal sheets at the same time. Furthermore, when two or more metal sheets stick together due to burrs and whiskers resulting from the punching and plating process, it is difficult for the clamping fingers to separate the adhering metal sheets. Consequently, more than one metal sheet is often loaded on the die-bonding machine at one same time, and this results in decreased efficiency of production of semiconductor devices.

## SUMMARY OF THE INVENTION

Accordingly, it is an object of the present invention to provide a handling apparatus which can precisely separate and pick up metal-sheet work pieces one at a time from a stack.

Another object of the present invention is to provide a handling apparatus which can manipulate metal-sheet work pieces of various sizes.

In view of these and other objects, the present invention provides an apparatus for handling stacked metal-sheet work pieces of uniform size and shape, the apparatus comprising storage means defining a storage space for receiving a stack of the metal-sheet work pieces; separating means for separating the stacked work pieces from one another in the storage space; and pick-up means for picking up each of the work pieces in the storage space in turn, beginning with the topmost work piece, to transfer the work piece which has been picked up, to a predetermined position outside of the storage space. The separating unit includes a magnet unit. This magnet unit produces a magnetic field in the storage space, the magnetic field being such that the lines of magnetic flux extend substantially horizontally within the storage space. This magnetic field causes the work pieces in the storage space to be magnetized and to repel one another. The storage means includes means for retaining the stacked work pieces in precise vertical alignment in the storage space. Accordingly, when magnetized, the work pieces are separated from one another, and some of the work pieces, in particular, the topmost one is even suspended in the air so that the pick-up means is able to pick up the work pieces precisely one at a time.

The magnetic means may include a magnet and a pair of horizontally spaced magnet-pole members for primarily concentrating the magnetic field between the magnet-pole members. Each magnet-pole member is connected to a pole of the magnet. The storage means may include a pair of vertically-extending and horizontally-spaced first guide members between which the storage space is defined. This first guide members are made of a nonmagnetic material, and are arranged in a first horizontal direction parallel to a direction in which the magnet-pole members are arranged. When the work pieces repel one another, the first guide members restrain horizontal movement, in the first horizontal direction, of the work pieces. This assures that some of the work pieces are vertically moved and suspended in the air.

The magnet-pole members may be mounted on the first guide members, respectively. Alternatively, the magnet-pole members may be mounted on the pick-up means.

It is preferred that the storage means further includes means for adjusting the distance between the first guide members. This adjusting means allows the handling apparatus to manipulate metal-sheet work pieces of various sizes.

## BRIEF DESCRIPTION OF THE DRAWINGS

In the drawings:

FIG. 1 is a side-elevational view, partly in section, of a handling apparatus according to the present invention;

FIG. 2 is a front view, with some parts omitted and broken away for the sake of clarity, of the handling apparatus in FIG. 1;

FIG. 3 is a plan view of the handling apparatus in FIG. 1;

FIG. 4 is a schematic diagram of stacked metal sheets positioned between opposite magnetic poles;

FIG. 5 is an enlarged side-elevational view of a storage unit and a chuck shown in FIG. 1;

FIG. 6 is a side-elevational view, with some parts in section and omitted for the sake of clarity, of another embodiment according to the present invention;

FIG. 7 is a front view, with a front guide plate omitted, of the handling apparatus in FIG. 6;

FIG. 8 is a plan view, with some parts omitted and broken away, of the handling apparatus in FIG. 6; and

FIG. 9 is an enlarged side-elevational view of a storage unit and a pick-up head shown in FIG. 6.

## DETAILED DESCRIPTION OF THE PREFERRED EMBODIMENTS

Referring now to the drawings, like reference numerals in all views designate corresponding parts, and descriptions of these corresponding parts are omitted after being given once.

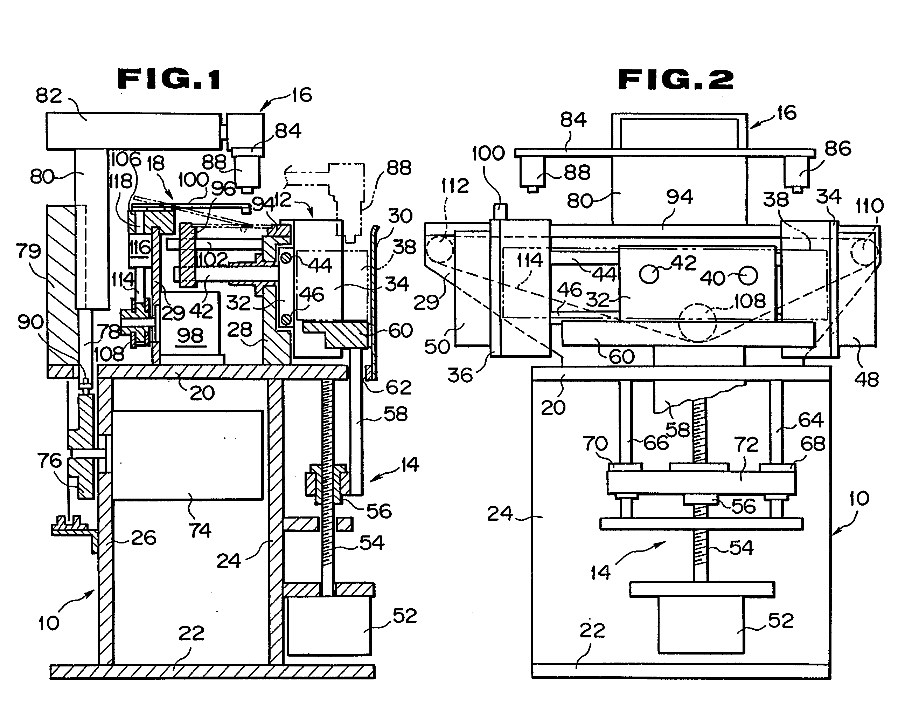

FIGS. 1 to 5 illustrate a apparatus for handling metal sheets of lead frames according to the present invention. This handling apparatus is designed to be disposed on a die-bonding machine (not shown), and is primarily constituted of a machine frame 10, a metal-sheet storage unit 12, a separating unit, a lift unit 14, a pick-up unit 16, a transfer unit 18, and a control unit (not shown).

As best shown in FIG. 1, the machine frame 10 includes top, bottom, front and rear walls 20, 22, 24 and 26, respectively. The bottom wall 22 is adapted to be horizontally and fixedly disposed on the die bonding machine. The front and rear walls 24 and 26 are of generally the same size and are erected on the bottom wall 22 in parallel relation to each other. The top wall 20 bridges the tops of the front and rear walls 24 and 26, and has a front portion projecting forward of the front wall 24. The machine frame further includes first and second support walls 28 and 29. The first support wall 28 is erected on the top wall 20 so as to be parallel to the front and rear walls 24 and 26 and partitions off the front portion of the top wall 20 from the remainder of the top wall 20. The second support wall 29 is erected behind the first support wall 28 in parallel relation to the first support wall 28. This second support wall 29 is of a generally inverted trapezoid configuration having a transversely extending larger or upper edge (see FIG. 2).

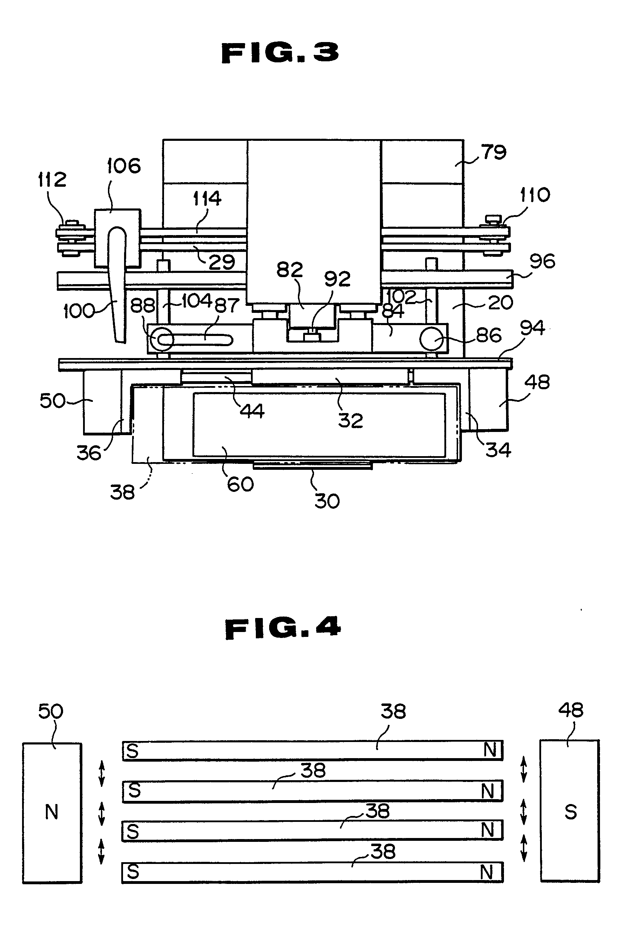

The storage unit 12 is arranged on the front portion of the top wall 20. The storage unit 12 includes front and rear guide plates 30 and 32, and opposite side guide plates 34 and 36, which surround and define a storage space for storing multiple metal sheets 38 stacked one upon another. These guide plates 30, 32, 34 and 36 are made of a nonmagnetic material. As best shown in FIG. 1, the front guide plate 30 is secured to the front edge of the top wall 20 and extends upward to be opposed to the first support wall 28. The rear guide plate 32 is horizontally spaced from and parallel to the front guide plate 30, and is connected to the first support wall 28 for forward and backward movement so that the distance between the front and rear guide plates 30 and 32 is adjustable. This movement of the rear guide plate 32 is enabled by a pair of rods 40 and 42 extending backward from the rear guide plate 32 and loosely passing through the first support wall 28. As best shown in FIG. 3, each of the opposite side guide plates 34 and 36 is L-shaped in cross section. The right side guide plate 34, as viewed in FIGS. 2 and 3, is fixedly connected to the rear guide plate 32 to define the right end of the storage space while the left side guide plate 36 is connected via sliding rods 44 and 46 to the rear guide plate 32 for sideward movement to define the left end of the storage space. In other words, the side guide plates 34 and 36 are horizontally spaced from each other, and the distance between the side guide plates 34 and 36 is also adjustable.

In this embodiment, the separating unit in the form of a pair of magnet units 48 and 50 are disposed on the outer faces of the side guide plates 34 and 36, respectively. Each of these magnet units 48 and 50 includes an alternating current electromagnet (not shown); and a magnet-pole member (not shown) connected to a pole of the electromagnet. The magnet-pole member is attached to the upper portion of the outer face of the corresponding side guide plate. The electromagnets on the side guide plates 34 and 36 are to be connected to an AC power source (not shown), and, when supplied with AC current, the electromagnets produce a magnetic field such that the lines of magnetic flux extend substantially horizontally between the magnet-pole members (between the magnet units 48 and 50). More specifically, the electrical connection between the AC power source and the electromagnets is such that the magnet-pole members show the opposite polarities at any time when the current is non-zero.

As best shown in FIGS. 1 and 2, the lift unit 14 is disposed primarily under the storage unit 12. The lift unit 14 includes a lift drive motor 52, a lead screw 54, a mobile nut 56, a connecting plate 58, and a base slat 60. The drive motor 52 is mounted on the lower portion of the machine frame front wall 24. The lead screw 54 is drivingly connected to the output shaft of the drive motor 52 and extends vertically to the front portion of the top wall 20. The mobile nut 56 is threadedly engaged with the lead screw 54. The connecting plate 58 is fixed at its lower end to the mobile nut 56 and extends vertically into the storage space through a slot 62 which is formed in the front portion of the top wall 20. The base slat 60 is disposed within the storage space and is mounted on top of the connecting plate 58. This base slat 60 is made of a magnetic material. When the drive motor 52 is actuated, the base slat 60 is moved upward or downward within the storage space. In FIG. 2, reference numerals 64 and 66 designate a pair of guide rods disposed vertically at the opposite sides of the lead screw 54. A pair of sliders 68 and 70 are slidably disposed on the guide rods 64 and 66, respectively, and are connected to the mobile nut 56 by a joint arm 72.

The pick-up unit 16 (see FIGS. 1 and 2) includes a pick-up drive motor 74, a cam 76, a cam follower 78, a guide wall 79, a sliding block 80, a cylinder actuator 82, a hanger arm 84, and a pair of magnetic chucks 86 and 88. The pick-up drive motor 74 is mounted on the rear wall 26 of the machine frame 10. The cam 76 is drivingly connected to the output shaft of the motor 74 so as to rotate about a horizontal axis. The guide wall 79 is fixedly erected on the rear edge of the top wall 20. The sliding block 80 is connected to the guide wall 79 for vertical movement. The cam follower 78 hangs from the sliding block 80 and contacts the periphery of the cam 76 via a cam roller 90. The cylinder actuator 82 is mounted on top of the sliding block 80 so that its piston rod 92 is movable forward and backward. This cylinder actuator 82 is connected to a suitable power source such as a hydraulic or pneumatic unit (not shown). The hanger arm 84 is attached to the front end of the piston rod 92 and is disposed transversely. The magnetic chucks 86 and 88 hang down from the opposite ends of the hanger arm 84. The distance between these chucks 86 and 88 is adjusted by means of a slot 87 and a nut-and-bolt connection (not shown) for detachably attaching the left chuck 88 to the hanger arm 84 (see FIG. 3). The magnetic chucks 86 and 88 are connected to a DC power supply and, when supplied with DC current, produce magnetic fields therearound to attract ferrous materials. When the aforementioned pick-up drive motor 74 is actuated, the magnetic chucks 86 and 88 are moved upward and downward. Furthermore, when the cylinder actuator 82 is actuated, the magnetic chucks 86 and 88 are moved forward and backward.

The transfer unit 18 is arranged between the storage unit 12 and the guide wall 79. As best shown in FIGS. 1 and 3, the transfer unit 18 is primarily constituted of front and rear spaced parallel guide rails 94 and 96, a drive motor 98, an arm base 106, and a mobile arm 100. The front guide rail 94 is mounted on the upper edge of the first support wall 28 and extends transversely along the upper edge of the second support wall 29. The rear guide rail 96 is interposed between the first and second support walls 28 and 29, and is connected to the first support wall 28 via guide rods 102 and 104 so as to be movable backward and forward. Further, the rear guide rail 96 is attached to portions of the rods 40 and 42 so that the distance between the guide rails 94 and 96 is generally, equal to the distance between the front and rear guide plates 30 and 32 of the storage unit 12. Therefore, when the rear guide plate 32 is moved to adjust the distance between the front and rear guide plates 30 and 32, the rear guide rail 96 also moves in the same direction and for the same distance as the rear guide plate 32 so that the distance between the front and rear guide rails 94 and 96 is constantly equal to the distance between the front and rear guide plates 30 and 32. The drive motor 98 is secured to the second support wall 29 so that its output shaft extends backward. The arm base 106 is connected to the upper edge of the second support wall 29 for transverse movement along the upper edge of the second support wall 29. This arm base 106 is drivingly connected to the output shaft of the drive motor 98 via a belt-and-pulley mechanism which is composed of a drive pulley 108, guide pulleys 110 and 112, and a belt 114. Therefore, when the drive motor 98 is actuated, the arm base 106 is transferred transversely along the guide rails 94 and 96. The arm base 106 is provided with a solenoid 116 which is capable of vertically moving a plunger 118 slidably held by the arm base 106. The mobile arm 100 is pivotally connected to the arm base 106 for upward and downward movement. The front portion of the mobile arm 100 is disposed over the area between the guide rails 94 and 96 while the rear end of the mobile arm 100 is in contact with the upper end of the plunger 118. Consequently, when the plunger 118 is moved by the solenoid 116, the mobile arm 100 is pivoted upward and downward.

The control unit is a conventional electrical controller including appropriate sensors and a computer for controlling the operation of the actuators 52, 74, 82 and 98 and the electromagnets 48, 50, 86, 88 and 116.

To operate the aforementioned handling apparatus, the apparatus is mounted on a die-bonding machine so that the right ends of the guide rails 94 and 96 are located in a proper position over the loading section of the die-bonding machine. The actuators 52, 74, 82 and 98, and the electromagnets 48, 50, 86, 88 and 116, are each connected to their respective power sources. The base slat 60, the magnetic chucks 86 and 88, and the mobile arm 100, are moved to their respective initial positions as shown in FIGS. 1 to 3. The distance between the front and rear guide plates 30 and 32 are adjusted to a distance slightly greater than the widths of metal sheets 38 which are to be supplied to the die bonding machine. Also, the distance between the side guide plates 34 and 36 are adjusted to a distance slightly greater than the lengths of the metal sheets 38. Then, a stack of the metal sheets 38 of lead frames are put in the storage space and placed on the base slat 60 as shown by the phantom lines in FIGS. 1 to 3. More specifically, the stack of the metal sheets 38 are placed on the base slat in such a manner that the opposite ends of the stack slightly contact the side guide plates 34 and 36, respectively, while the opposite sides of the stack slightly contact the front and rear guide plates 30 and 32, respectively. Further more specifically, the opposite ends of the stack adjoin the magnet units 48 and 50 respectively, with the opposite side guide plates 34 and 36 interposed between each magnet unit and the corresponding end of the stack. The height of the stack may not exceed, for example, the level of the upper edge of the rear guide plate 32. Further, the position of the left magnetic chuck 88 is adjusted so that the distance between the chucks 86 and 88 is less than the lengths of the metal sheets 38. After this, the operation for transferring each one of the metal sheets 38 to the loading section of the die-bonding machine is begun.

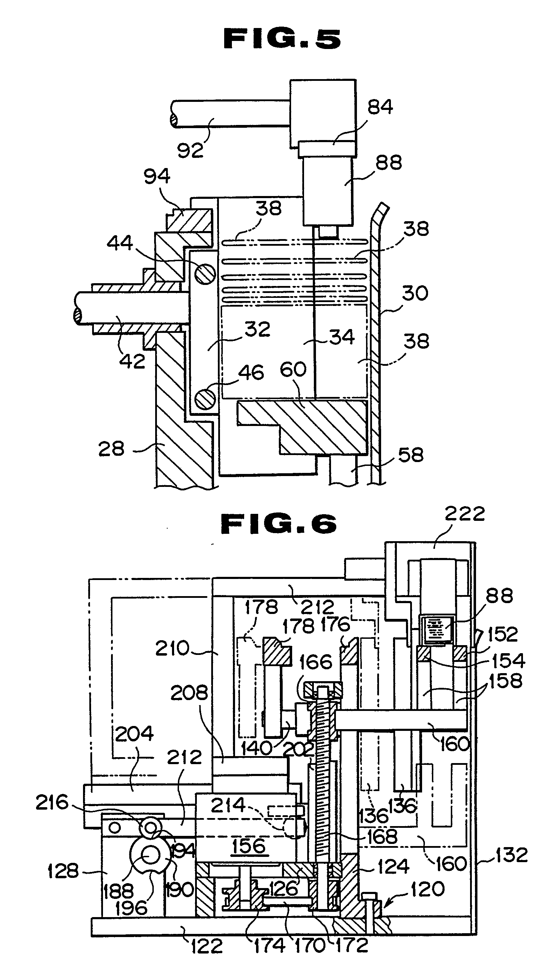

First, the magnetic chucks 86 and 88 are moved forward and downward and are placed at positions above the stack of the metal sheets 38 as shown by the phantom line in FIG. 1. In these positions, the magnetic chucks 86 and 88 have their lower ends in the storage space, that is, the lower ends of the chucks 86 and 88 are at levels lower than the upper edges of the side guide plates 34 and 36. Then, the electromagnets 48 and 50 are excited so that the metal sheets 38 are subjected to a magnetic field which is produced between the magnet units 48 and 50. (The electromagnets 48 and 50 may be excited by a damped AC current by means of a "zero-crossing" switch circuit to avoid any undesired magnetic effects on semiconductor chips.) As a result, the metal sheets 38 are magnetized in such a manner that all the ends on one side of the stack are of the same polarity, e.g., the south, and all the ends on the other side of the stack are also of the same polarity, e.g., the north. More specifically, when the right and left electromagnets 48 and 50 show the respective polarities of south and north, the right ends of the metal sheets 38, as shown in FIG. 4, are polarized as north while the left ends of the metal sheets 38 are polarized as south. The metal sheets 38 therefore repel one another due to a magnetic force resulting from their magnetization. When the metal sheets 38 repel one another, the guide plates 30, 32, 34 and 36 restrain horizontal movement of each of the metal sheets 38. That is, the stacked metal sheets 38 in the storage space are retained in precise vertical alignment. Accordingly, the topmost and the several metal sheets 38 beneath are lifted and suspended in the air as shown by the phantom line in FIG. 5, and thus are surely separated from one another. After that, the base slat 60 is moved upward slowly until the topmost metal sheet contacts the lower ends of the magnetic chucks 86 and 88. Then, the magnetic chucks 86 and 88 are excited, and thereby the topmost metal sheet 38 is held by the chucks 86 and 88. The electromagnets 48 and 50 are de-energized at the same time as the magnetic chucks 86 and 88 are excited. Then, the magnetic chucks 86 and 88 are moved upward, transferred backward to the position above the guide rails 94 and 96, and are again moved downward until the held metal sheet 38 almost contacts the guide rails 94 and 96. At this point, the magnetic chucks 86 and 88 are de-energized, and thereby the metal sheet 38 is released from the chucks 86 and 88 and is placed on the guide rails 94 and 94. In order to demagnetize the magnetic chucks 86 and 88, a damped AC current may be supplied to the chucks by means of the aforementioned zero-crossing switch circuit. After that, the chucks 86 and 88 are returned to their initial positions to prepare for the transportation of the next metal sheet. Thereafter, the mobile arm 100 is pivoted downward to engage the left end of the metal sheet 38 on the guide rails 94 and 96, and then is transferred to the right as viewed in FIGS. 2 and 3. The metal sheet 38, pushed by the mobile arm 100, slides along the guide rails 94 and 96, and thus is placed on the loading section of the die-bonding machine. Then, the mobile arm 100 is again returned to the initial position. The series of aforementioned steps are repeated to transfer the next metal sheet, and thus each metal sheet in the storage unit 12 can be transferred in turn, to the die-bonding machine, beginning with the topmost metal sheet. In addition, the last metal sheet can be surely separated from the base slat 60 since the slat 60 is made of a magnetic material.

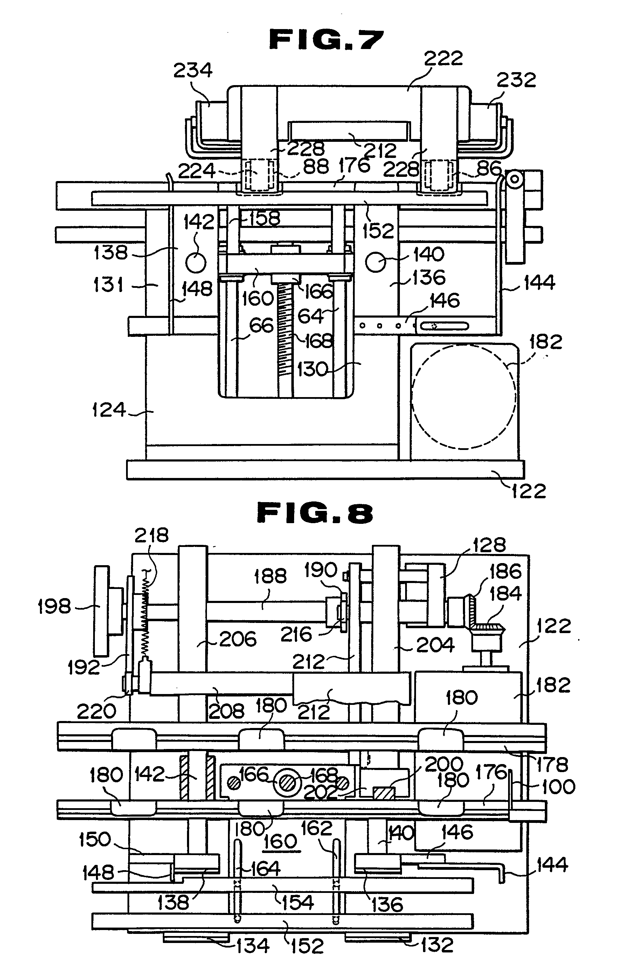

FIGS. 6 to 9 illustrate another embodiment of the metal sheet-handling apparatus according to the present invention. In these drawings, reference numeral 120 denotes a machine frame which includes a rectangular bottom wall 122, a support wall 124, mounting wall 126, and a bearing wall 128. As best shown in FIG 7, the support wall 124 is of a generally U-shaped plate structure having two spaced arm portions 130 and 131. This support wall 124 is fixedly erected on the bottom wall 122 with its arm portions 130 and 131 arranged sideways and extending upward. The mounting wall 126 is disposed horizontally at a position behind the support wall 124, and is secured to both the bottom wall 122 and the lower portion of the support wall 124. The bearing wall 128 is also erected on the bottom wall 122 at the rear right side portion of the bottom wall 122 (see FIG. 8) so as to be generally perpendicular to the support wall 124.

As shown in FIGS. 6 and 8, a pair of front guide plates 132 and 134 are fixed at their lower end to the front edge of the bottom wall 122, and extend upward to a level generally as high as the upper edge of the support wall 124. A pair of rear guide plates 136 and 138 are interposed between the support wall 124 and the front guide plates, and are connected via a pair of slidable rods 140 and 142 to the arm portions 130 and 131 for forward and backward movement. The rods 140 and 142 are slidably passes through the arm portions 130 and 131, and project backwards from the arm portions. A right side guide plate 144 is connected to the right rear guide plate 136 via a connecting arm 146 so as to be movable sidewards, while a left guide guide plate 148 is fixedly connected to the left rear guide plate 138 via another connecting arm 150. These guide plates 132, 134, 136, 138, 144 and 148 surround and define a storage space for a stack of metal sheets.

A pair of spaced parallel base bars 152 and 154 made of a magnetic material, are disposed in the storage space. These bars 152 and 154 can be vertically moved by a lift drive motor 156 mounted on the mounting wall 126. More specifically, the base bars 152 and 154 extend transversely along the front edge of the bottom wall 122, and are mounted via spacers 158 to a horizontal connecting plate 160. These base bars 152 and 154 are slidable forward and backward along a pair of slots 162 and 164 formed in the connecting plate 160, and thus the positions and distance of and between the bars 152 and 154 are adjustable. The connecting plate 160 extends backward from the bars, passes through the space between the arm portions 130 and 131, and is attached at its rear edge to a nut 166. This nut 166 is threadedly engaged with a vertically extending lead screw 168 which is rotatably supported by the mounting wall 126. This lead screw 168 is drivingly connected to the drive shaft of the lift drive motor 156 through a belt 170 and pulleys 172 and 174.

As shown in FIGS. 6 and 7, a front guide rail 176 bridges the tops of the arm portions 130 and 131 of the support wall 124 and extends past the arm portions 130 and 131. A rear guide rail 178 is disposed parallel to the front guide rail 176, and is attached to the respective rear ends of the rods 140 and 142. Therefore, when the rear guide plates 136 and 138 are moved, for example, to a position indicated by the phantom line in FIG. 6, the rear guide rail 178 is also moved, in the same direction and by the same distance, to a position shown by the phantom line in FIG. 6. These guide rails 176 and 178 have several pairs of opposed recesses 180 (see FIG. 8) for receiving magnet-pole plates which will be described later on.

A pick-up unit for picking up metal sheets will be described hereinbelow.

As shown in FIGS. 7 and 8, a drive motor 182 is mounted on the bottom wall 122. The drive shaft of this motor 182 is drivingly connected via bevel gears 184 and 186 to a rotation shaft 188 which is rotatably held by the bearing wall 128. This shaft 188, as shown in FIGS. 6 and 8, is provided with first and second cams 190 and 192. The first cam 190 is of a generally circular configuration, and is coaxial with the shaft 188. The first cam has a pair of diametrically opposed recesses 194 and 196 which are formed in the periphery of the cam 190. The second cam 192 is of a generally circular configuration and has considerably larger size than the first cam 190. This second cam 192 is eccentric to the shaft 188. Reference numeral 198 denotes a lug for manual rotation of the shaft 188.

A pair of spaced parallel vertical rail members 200 (only one of which is shown in FIG. 6) are fixed to the support wall 124 and extend vertically along the arm portions 130 and 131 of the support wall 124. A pair of vertical sliders 202 (only one of which is shown in FIGS. 6 and 8) are slidably engaged to the vertical rail members 200. A pair of horizontal rail members 204 and 206 are joined at their front ends respectively to the sliders 202, and extend horizontally backward. These horizontal rail members 204 and 206 are joined to each other by a suitable means and are vertically transferred at the same time due to the movement of both the first cam 190 and a pivot arm 212. The pivot arm 212 is pivotally connected at its rear end to the bearing wall 128, extends forward over the cam 190, and a front tip roller 214 is brought into contact with the front end of the rail member 204. This pivot arm 212 further has a cam roller 216 in rolling contact with the first cam 190. Accordingly, when the cam roller 216 is received in either of the recesses 194 and 196, the horizontal rail members 204 and 206 are in their lowermost positions as shown in FIG. 6, while on the other hand, when the cam roller 216 comes out of the recesses 194 and 196 due to the rotation of the shaft 188, the pivot arm 212 is pivoted upward, and thus the horizontal rail members 204 and 206 are lifted to their uppermost positions (not shown). Further, a horizontal slider 208 is engaged with both the horizontal rail members 204 and 206 for horizontal sliding movement along the horizontal rail members 204 and 206. This horizontal slider 208 is provided at its left end with a cam roller 220 in rolling contact with the periphery of the second cam 192, and is urged backward by a coil spring 218 interconnecting the horizontal slider 208 with the bottom wall 122. Consequently, the horizontal slider 208 is moved forward and backward due to the rotation of the shaft 188.

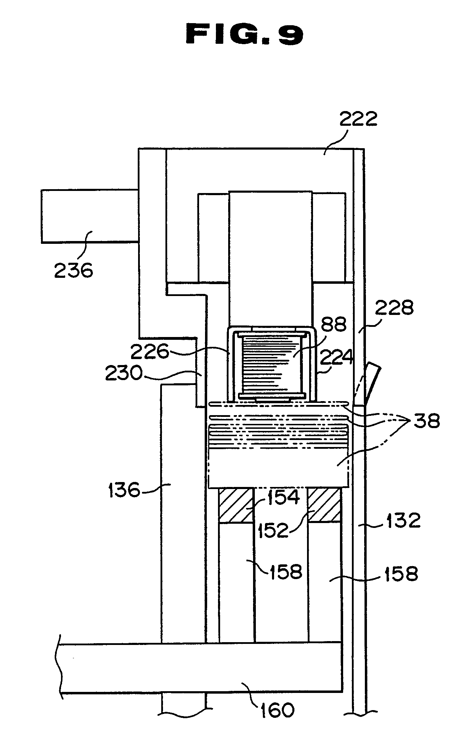

Referring further to FIG. 6, a pillar plate 210 is mounted on the horizontal slider 208 and extends upward. A pick-up arm 212 is joined at its rear end to the top of the pillar plate 210. A pick-up head including a transversely extending hanger arm 222 and a pair of magnetic chucks 86 and 88, is attached to the front end of the pick-up arm 212. As shown in FIGS. 7 and 9, the pick-up head further includes two pairs of terminal plates 224 and 226 attached to the chucks 86 and 88. Each pair of terminal plates 224 and 226 are disposed at the front and rear sides of the corresponding magnetic chuck. The lower ends of these terminal plates are horizontally aligned with the lower tip of the corresponding magnetic chuck. These terminal plates 224 and 226 are connected to a DC power source (not shown). Therefore, when a metal sheet 38 is brought into contact with both the terminal plates 224 and 226 as shown by the phantom line in FIG. 9, the terminal plates 224 and 226 are electrically connected, and so an appropriate sensor (not shown) can detect whether or not the magnetic chuck is in contact with the metal sheet 38.

Furthermore in this embodiment, the pick-up head is provided with a separating unit including two pairs of front and rear opposed magnet-pole plates 228 and 230 made of a magnetic material and a pair of AC electromagnets 232 and 234 (see FIGS. 6, 7 and 9). Each pair of the front and rear magnet-pole plates 228 and 230 are arranged at the front and rear sides of the corresponding set of the magnetic chuck and terminal plates. The front magnet-pole plate 228 is fixed to the hanger arm 222 while the rear magnet-pole plate 230 is movably connected to the hanger arm 222 for forward and backward movement via a guide rod 236. Therefore, the distance between the front and rear magnet-pole plates 228 and 230 is adjustable so as to be slightly greater than the widths of metal sheets to be received in the storage unit. The magnet-pole members 228 and 230 extend downward to a level lower than the lower end of the corresponding magnetic chuck as shown in FIG. 9. The AC electromagnets 232 and 234 are mounted on the opposite ends of the hanger arm 222, and are connected respectively to the pairs of the magnet-pole plates 228 and 230 so that, when AC current is applied to the electromagnets 232 and 234, a magnetic field is primarily concentrated between each pair of the front and rear magnet-pole plates 228 and 230.

In operation, a stack of metal sheets 38 is placed on the base bars 152 and 154 in the storage space as shown in FIG. 9. The pick-up head is brought to a position shown in FIGS. 6 and 7 by means of the drive motor 182, the cams 190 and 192 and the like. In this position, the lower ends of the magnet-pole plates 228 and 230 are at a level lower than the upper edges of the front and rear guide plates 132, 134, 136 and 138. However, the magnet-pole plates do not butt against the guide plates since, as illustrated in FIG. 7, the left pair of the magnet-pole plates 228 and 230 are located between the rear guide plates 136 and 138, and the right pair of the magnet-pole plates 228 and 230 are located at the right side of the rear guide plate 136. Next, the electromagnets 232 and 234 are activated. This produces a magnetic field in the upper area of the storage space, the magnetic field being such that the lines of magnetic flux extend between each pair of the magnet-pole plates 228 and 230. The base bars 152 and 154 are lifted slowly so that the topmost metal sheet and the several metal sheets beneath are subjected to the magnetic field. Those metal sheets 38 subjected to the magnetic field repel one another since all the edges on one side of the stack are of the same polarity, and all the edges on the other side of the stack are also of the same polarity. As a result, the metal sheets in the magnetic field are separated from one another and are suspended in the air. As the base bars 152 and 154 are progressively raised, the topmost metal sheet 38 comes into contact with both the pairs of terminal plates 224 and 226 as shown in FIG. 9. The result is that the magnetic chucks 86 and 88 are excited and hold the topmost metal sheet 38. Thereafter, the pick-up head is lifted with the metal sheet 38, transferred backward, and is moved down so that the metal sheet 38, which has been picked up, is placed on the guide rails 176 and 178. The chucks 86 and 88 are then de-energized and are again lifted to the initial position. The metal sheet 38 which has been placed on the guide rails 176 and 178 are transferred along the guide rails by a mobile arm 100 in the same manner as that in the foregoing embodiment.

It will be understood that although preferred embodiments of the present invention have been shown and described, various modifications thereof will be apparent to those skilled in the art. For example, the magnetic chucks 86 and 88 may be replaced by conventional vacuum chucks. Also, instead of the AC electromagnets 48, 50, 232 and 234, DC electromagnets may be employed.

**Claims**

1. An apparatus for handling metal-sheet work pieces (38) stacked one upon another, the work pieces being of uniform size and shape, the handling apparatus characterized by comprising:
storage means (12) defining a storage space for receiving a stack of the metal-sheet work pieces (38), the storage means including means (34, 36, 132, 134, 136, 138) for retaining the stacked work pieces in precise vertical alignment in the storage space;
separating means for separating the stacked work pieces from one another in the storage space, the separating means including magnetic means (48, 50, 228, 230, 232, 234) for producing a magnetic field in the storage space so that the work pieces in the storage space are magnetized and repel one another, the magnetic field being such that the lines of magnetic flux extend substantially horizontally within the storage space; and
pick-up means (16, 182, 184, 186, 188, 190, 192, 200, 202, 204, 206, 208, 210, 212, 214, 216, 218, 220, 222) for picking up each of the work pieces in the storage space in turn, beginning with the topmost work piece, to transfer the work piece which has been picked up, to a predetermined position outside of the storage space.

2. A handling apparatus according to claim 1, wherein the magnetic means (48, 50, 228, 230, 232, 234) comprises: a magnet (232, 234); and a pair of horizontally spaced magnet-pole members (228, 230), each connected to a pole of the magnet, primarily to concentrate said magnetic field therebetween, and wherein the retaining means (34, 36, 132, 134, 136, 138) comprises a pair of vertically-extending and horizontally-spaced first guide members (34, 36, 132, 134, 136, 138) between which said storage space is defined, the first guide members (34, 36, 132, 134, 136, 138) being made of a nonmagnetic material, the first guide members being arranged in a first horizontal direction parallel to a direction in which the magnet-pole members (228, 230) are arranged, the first guide members (34, 36, 132, 134, 136, 138) restraining horizontal movement, in said first horizontal direction, of the work pieces (38), when the work pieces repel one another.

3. A handling apparatus according to claim 2, wherein the retaining means (34, 36, 132, 134, 136, 138) further comprises a pair of vertically-extending and horizontally-spaced second guide members (30, 32, 144, 148) between which said storage space is defined, the second guide members (30, 32, 144, 148) being made of a nonmagnetic material, the second guide members being arranged in a second horizontal direction generally perpendicular to said first horizontal direction, the second guide members (30, 32, 144, 148) restraining horizontal movement, in said second horizontal direction, of the work pieces (38), when the work pieces repel one another.

4. A handling apparatus according to claim 3, wherein each of the first guide members (34, 36) has inner and outer faces, the inner faces of the first guide members being opposed to each other, and wherein the magnet-pole members are mounted on the outer faces of the first guide members (34, 36), respectively.

5. A handling apparatus according to claim 4, wherein the pick up means (16) comprises: a pick-up head (86, 88) for releasably holding the work pieces; and a first drive mechanism (74, 76, 78, 79, 80, 82, 84) for transferring the pick-up head between first and second positions, the first position being above the storage space, the second position being above said predetermined position, the pick-up head (86, 88) having a lower end for directly contacting the work pieces (38), the lower end being positioned in the storage space when the pick-up head is in said first position.

6. A handling apparatus according to claim 3, wherein the pick-up means comprises: a pick-up head (86, 88) for releasably holding the work pieces (38); and a first drive mechanism (182, 184, 186, 188, 190, 192, 200, 202, 204, 206, 208, 210, 212, 214, 216, 218, 220, 222) for transferring the pick-up head (86, 88) between first and second positions, the first position being above the storage space, the second position being above said predetermined position, and wherein the magnet-pole members (228, 230) are mounted on the pick-up head (86, 88).

7. A handling apparatus according to claim 6, wherein the pick-up head (86, 88) has a lower end for directly contacting the work pieces (38), the lower end being positioned in the storage space when the pick-up head (86, 88) is in said first position.

8. A handling apparatus according to claim 7, wherein the magnet-pole members (228, 230) extend downward to a level lower than the lower end of the pick up head (86, 88).

9. A handling apparatus according to claim 5 or 7, further comprising lift means (14, 152, 154, 156, 158, 160, 166, 168, 170, 172, 174) for vertically moving the stacked work pieces (38) in the storage space so that when the pick-up head (86, 88) is in the first position, the topmost work piece is brought into contact with the lower end of the pick-up head (86, 88).

10. A handling apparatus according to claim 3, wherein the storage means further includes: means (44, 46, 140, 142) for adjusting the distance between the first guide members (34, 36, 132, 134, 136, 138); and means (40, 42, 146) for adjusting the distance between the second guide members (30, 32, 144, 148).

FIG.1

FIG.2

EP 0 399 125 A1

# FIG.3

# FIG.4

# FIG.5

# FIG.6

# FIG.7

# FIG.8

# FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 474 141 (R.T. CHATTERTON) <br> * Column 1, lines 1-11; figures 1,2,5,6 * | 1,5-9 | B 65 G 59/04 <br> B 21 D 43/24 |
| A | * Column 6, lines 44-51; figures 3,4 * | 2-4 | |
| X | US-A-4 024 963 (C.F. HAUTAU) <br> * Abstract; figure 3 * | 1-4 | |
| X | EP-A-0 065 737 (SIEMENS AG) <br> * Abstract; figure * | 1 | |
| A | US-A-3 353 822 (K. DANGELMAIER) <br> * Whole document * | 1 | |

TECHNICAL FIELDS SEARCHED (Int. Cl.5)

B 65 G
B 21 D

The present search report has been drawn up for all claims

| Place of search | Date of completion of the search | Examiner |
|---|---|---|
| THE HAGUE | 23-01-1990 | BEERNAERT J.E. |

EPO FORM 1503 03.82 (P0401)